# EUROPÄISCHE PATENTSCHRIFT

(11) **EP 4 160 390 B1**
(45) Veröffentlichungstag und Bekanntmachung des Hinweises auf die Patenterteilung: **27.03.2024**
(21) Anmeldenummer: 21199868.7
(22) Anmeldetag: 29.09.2021
(51) Int. Cl.: G06F 8/65, G06F 11/36, G06F 8/70

(54) **VERFAHREN UND ANORDNUNG ZUR INBETRIEBNAHME EINER AKTUALISIERTEN ANWENDUNG FÜR EINE INDUSTRIELLE AUTOMATISIERUNGSANORDNUNG**
METHOD AND ASSEMBLY FOR COMMISSIONING AN UPDATED APPLICATION FOR AN INDUSTRIAL AUTOMATION DEVICE
PROCÉDÉ ET AGENCEMENT DE MISE EN SERVICE D'UNE APPLICATION MISE À JOUR POUR UN AGENCEMENT D'AUTOMATISATION INDUSTRIELLE

(43) Veröffentlichungstag der Anmeldung: 05.04.2023
(73) Patentinhaber: Siemens Aktiengesellschaft, 80333 München (DE)
(72) Erfinder: Götz, Jan, 91054 Buckenhof (DE); Reichmann, Jürgen, 81825 München (DE)
(74) Vertreter: Siemens Patent Attorneys

(56) Entgegenhaltungen:
- US-A1- 2015 192 918
- US-A1- 2019 297 160

## Beschreibung

Die Erfindung betrifft ein Verfahren zur Inbetriebnahme einer aktualisierten Anwendung für eine industrielle Automatisierungsanordnung gemäß dem Oberbegriff des Patentanspruchs 1, und eine Anordnung Verfahren zur Inbetriebnahme einer aktualisierten Anwendung für eine industrielle Automatisierungsanordnung gemäß dem Oberbegriff des Patentanspruchs 11.

Aktuelle Steuerungseinheiten haben ein lokales Prozessabbild, auf das sie schreibend und lesend zugreifen. Daten bzw. Werte, die in diesem Prozessabbild vorhanden sind, können von den Steuerungsfunktionen benutzt werden. Daten bzw. Werte des Prozessabbildes sind insbesondere sog. I/O-Werte, also Sensordaten und Aktordaten.

Externe Daten, d.h. Daten, die nicht über die digitalen und analogen Ein-/Ausgänge bzw. über Steuerungseinheiten-typische Busse wie Profinet gelesen/geschrieben werden, können nur über Schnittstellen bzw. Protokolle wie OPC-UA von externen Applikationen in die Steuerungseinheit eingebracht oder ausgegeben werden, sind dann aber nicht unmittelbarer Bestandteil des lokalen Prozessabbildes. Insbesondere sind die Prozessabbilder zweier verschiedener Steuerungseinheiten nicht gegenseitig sichtbar und damit auch nicht gegenseitig zugreifbar. Externe Daten müssen somit händisch von den Applikationen in das lokale Prozessabbild eingebracht werden. Normalerweise sind dafür auch ein Stoppen und ein anschließender Neustart der beteiligten Anwendungen erforderlich.

Ein Datenaustausch zwischen Applikationen auf unterschiedlichen Geräten ist möglich, beispielsweise über ein OPC-UA - Protokoll oder im Fall von PLCs (PLC = Programmable Logic Controller = Speicherprogrammierbare Steuerung) des Herstellers Siemens dem S7-Protokoll. Dies geschieht durch den Programmierer händisch in der Engineeringphase, d.h. es erfolgt nicht automatisch und es kann nicht im laufenden Betrieb durchgeführt werden.

Soll eine Anwendung auf Daten einer entfernten Steuerungseinheit zugreifen, so muss diese Anwendung "per Hand" auf einen entsprechenden Datenkanal zugreifen. Ein lokal vorhandener OPC UA-Server kann dies nicht automatisiert erledigen, da er keine Client-Fähigkeit besitzt. Für den Fall, dass ein lokaler OPC UA-Client vorhanden ist, muss die Datenverknüpfung "per Hand" erfolgen oder es muss ein Matching-Algorithmus in Kraft treten.

Das Patentdokument US 2019/0297160 A1 (HARRIMAN MERRILL [US] ET AL) 26. September 2019 (2019-09-26) betrifft einen Proxy Service eines industriellen Automatisierungssystems, der ein Software Defined Network beinhaltet, welches eingehende Anfragen im Rahmen eines Satzes von Regeln weiterleitet . Das Patentdokument US 2015/192918 A1 (OBERMEIER SEBASTIAN [CH] ET AL) 9. Juli 2015 (2015-07-09) betrifft das Aktualisieren einer industriellen Automatisierungsanlage mit einer Überprüfungsschicht, die eine "whitelist" von erlaubten Aktualisierung enthält, und das Update dahingehend überprüft.

Den bekannten Lösungen ist gemein, dass Anwendungen auf unterschiedliche Art und Weise auf die Daten eines lokal verfügbaren Prozessabbildes einerseits und auf externe Daten andererseits zugreifen müssen, so dass die Anwendungen immer auf die externen Zugriffe eingerichtet und/oder konfiguriert werden müssen, was insbesondere bei bestehenden Anwendungen ("Brownfield"-Anwendungen, "Legacy"-Anwendungen) und deren für Updates vorgesehene Nachfolge-Versionen oft nur mit Aufwand oder überhaupt nicht möglich ist. Im Bereich der Automatisierungstechnik sind daher Produktivbetrieb und Simulation meist getrennt.

Die geschilderten Einschränkungen erschweren den Test von aktualisierten Versionen bestehender Anwendungen insbesondere in Szenarien, in denen die neuen Versionen mit sog. "Live-Daten" parallel zur bisherigen Version der Anwendung auf einem separaten Testsystem betrieben werden sollen. Solche Tests sind aber wichtig, weil damit das Verhalten einer bestehenden Version und einer neuen Version - insbesondere eines sog. "Release-Kandidaten" oder "Betaversion", also einer fertigen Version, die endgültig geprüft werden soll -direkt verglichen werden können.

Die zu testenden Versionen müssen mit einem gegenüber der produktiven Version geänderten Interface auf Sensordaten oder allgemein das Prozessabbild des Produktivsystems zugreifen, so dass sich zumindest bezüglich des Interfaces oder konkret der API, die auf das Prozessabbild zugreift, die zu testende neue Version von der bestehenden Version einer Anwendung unterscheidet. Mit anderen Worten: die zu testende Version unterscheidet sich von der späteren produktiven Version, was generell bei Tests unerwünscht ist. Bisher wurde deswegen eine Simulation des endgültigen "Release-Kandidaten" meist unabhängig vom Produktivbetrieb vorab durchgeführt.

Es ist also eine Aufgabe der vorliegenden Erfindung, den Zugriff von Anwendungen auf Prozessabbilder, insbesondere externe Prozessabbilder, so zu vereinfachen, dass ein einheitliches Interface für sowohl produktiv betriebene, also auch parallel dazu betriebene zu testende Versionen von Anwendungen verwendet werden kann.

Es ist eine Kernidee zur Lösung dieser Aufgabe, dass durch eine lokale Software, insbesondere durch einen sogenannten Proxydienst (kurz: Proxy), die Sensordaten, die in einer industriellen Automatisierungsanlage gewonnen werden und die im sog. Prozessabbild einer industriellen Steuerung vorliegen, in das Prozessabbild eines separaten Testsystems hineingeschrieben bzw. aus diesem ausgelesen werden. Dabei werden Speicherzellen (z.B. I/O-Werte, Variablen oder Register), die noch nicht zum lokalen Prozessabbild des Testsystems gehören, dort angelegt bzw. allokiert, vorzugsweise durch ein lokales Prozessdatenmanagement, oder nach dem Anlegen zumindest im lokalen Prozessdatenmanagement registriert. Somit sind die "externen" Daten und Werte des Produktivsystems im lokalen Prozessabbild des Testsystems verfügbar, ohne dass die produktive noch die zu testende Version der Anwendung geändert werden müssen. Eine weitere Kernidee der Erfindung betrifft die Übertragung der von der zu testenden Anwendung erzeugten Daten - meist sog. Aktor-Werte, in das lokale Prozessabbild des Produktivsystems, so dass die zu testende Anwendung sukzessive die Steuerung der industriellen Anordnung probehalber übernehmen kann, bevor die zu testende Anwendung dann letztlich in das Produktivsystem übernommen wird.

Die Aufgabe wird insbesondere mit dem Verfahren nach Patentanspruch 1 gelöst. Dabei wird ein Verfahren zur Inbetriebnahme einer aktualisierten Anwendung für eine industrielle Automatisierungsanordnung vorgeschlagen, wobei eine erste industrielle Steuerung mit einer ersten Anwendung zumindest ein lokales Prozessabbild mit lokal verwendeten Prozessdaten umfasst, wobei die Prozessdaten aus einer Anzahl Werten bestehen, insbesondere Werte für Sensoren und/oder Aktoren der industriellen Automatisierungsanordnung, wobei ein lokales Prozessdatenmanagement zur Verwaltung von Bezeichnern und Speicheradressen der Werte vorgesehen ist, und wobei die erste Anwendung Informationen über die Bezeichner und Speicheradressen der Werte mit dem lokalen Prozessdatenmanagement austauscht und Werte im zumindest einen lokalen Prozessabbild mithilfe der Informationen liest und/oder schreibt. Dabei wird eine Testeinheit mit der aktualisierten Anwendung vorgesehen, insbesondere mit einer zu testenden neuen Version der ersten Anwendung, mit zumindest einem weiteren Prozessabbild und mit einem weiteren Prozessdatenmanagement, wobei die aktualisierte Anwendung Informationen über die Bezeichner und Speicheradressen der Werte mit dem lokalen Prozessdatenmanagement der Testeinheit austauscht und Werte im zumindest einen weiteren Prozessabbild liest und/oder schreibt. Dazu wird auf der Steuerung und auf der Testeinheit jeweils ein Proxydienst eingerichtet, wobei der Proxydienst jeweils eine Kommunikation mit dem jeweils lokalen Prozessdatenmanagement durchführt und Werte im jeweiligen lokalen Prozessabbild mithilfe der dabei ausgetauschten Informationen liest und/oder schreibt, wobei die aktualisierte Anwendung parallel zur ersten Anwendung ausgeführt wird, wobei die von der aktualisierten Anwendung zu lesenden Werte von den Proxydiensten aus dem zumindest einen Prozessabbild der ersten Steuerung ausgelesen und in das zumindest eine weitere Prozessabbild eingefügt werden. Dabei führt eine Überwachungseinrichtung eine Prüfung zumindest eines durch die aktualisierte Anwendung in das zumindest eine Prozessabbild der Testeinheit gespeicherten Ausgabewertes durch, wobei die aktualisierte Anwendung erst nach einer erfolgreichen Prüfung für eine Verwendung in einem produktiven Betrieb freigegeben wird. Durch dieses Verfahren kann eine zu testende Anwendung in gleicher Weise, wie sie später auf lokal verfügbare Daten in einem Prozessabbild eines Produktivsystems zugreift, bereits auf dem Testsystem auf diese Daten des Produktivsystems zugreifen, ohne dass die Anwendung dafür geändert oder umkonfiguriert werden muss.

Die Aufgabe wird außerdem durch die Anordnung gemäß Patentanspruch 11 gelöst, die zur Ausführung des Verfahrens eingerichtet ist. Dazu ist eine Anordnung zur Inbetriebnahme einer aktualisierten Anwendung für eine industrielle Automatisierungsanordnung vorgesehen, wobei eine erste industrielle Steuerung mit einer ersten Anwendung zumindest ein lokales Prozessabbild mit lokal verwendeten Prozessdaten umfasst, wobei die Prozessdaten aus einer Anzahl Werten bestehen, insbesondere Werte für Sensoren und/oder Aktoren der industriellen Automatisierungsanordnung, wobei die erste Steuerung ein lokales Prozessdatenmanagement zur Verwaltung von Bezeichnern und Speicheradressen der Werte umfasst, und wobei die erste Anwendung zum Austausch von Informationen über die Bezeichner und Speicheradressen der Werte mit dem lokalen Prozessdatenmanagement eingerichtet und zum Lesen und/oder Schreiben von Werten im zumindest einen lokalen Prozessabbild mithilfe der Informationen ausgebildet ist. Dabei ist eine Testeinheit mit der aktualisierten Anwendung vorgesehen, insbesondere mit einer zu testenden neuen Version der ersten Anwendung, und mit zumindest einem weiteren Prozessabbild und mit einem weiteren Prozessdatenmanagement, wobei die aktualisierte Anwendung zum Austausch von Informationen über die Bezeichner und Speicheradressen der Werte mit dem lokalen Prozessdatenmanagement der Testeinheit und zum Lesen und/oder Schreiben von Werten im zumindest einen weiteren Prozessabbild eingerichtet ist, wobei auf der Steuerung und auf der Testeinheit jeweils ein Proxydienst eingerichtet ist, wobei der Proxydienst jeweils zur Durchführung einer Kommunikation mit dem jeweils lokalen Prozessdatenmanagement und zum Lesen und/oder Schreiben von Werten im jeweiligen lokalen Prozessabbild mithilfe der dabei ausgetauschten Informationen eingerichtet ist, wobei eine Ausführung der aktualisierte Anwendung parallel zur ersten Anwendung vorgesehen ist, wobei weiter vorgesehen ist, dass die von der aktualisierten Anwendung zu lesenden Werte von den Proxydiensten aus dem zumindest einen Prozessabbild der ersten Steuerung ausgelesen und in das zumindest eine weitere Prozessabbild eingefügt werden, wobei eine Überwachungseinrichtung zur Prüfung zumindest eines durch die aktualisierte Anwendung in das zumindest eine Prozessabbild der Testeinheit gespeicherten Ausgabewertes vorgesehen ist, und wobei weiter vorgesehen ist, dass die aktualisierte Anwendung erst nach einer erfolgreichen Prüfung für eine Verwendung in einem produktiven Betrieb freigegeben wird. Durch diese Anordnung können die bereits zuvor anhand des Verfahrens diskutierten Vorteile erzielt werden.

Vorteilhafte Ausgestaltungen des Verfahrens sind in den abhängigen Patentansprüchen angegeben; deren Merkmale und Vorteile gelten gleichermaßen für die erfindungsgemäße Anordnung. Vorteilhafte Ausgestaltungen können auch in sinnfälliger Weise miteinander kombiniert werden.

In einer ersten Variante können die von der aktualisierten Anwendung erzeugten Ausgabewerte auf Plausibilität geprüft werden, insbesondere hinsichtlich der Einhaltung von fest vorgegebenen Kriterien oder Grenzwerten. In einer besonders vorteilhaften Variante wird zumindest ein von der ersten Anwendung als Ausgabewert in das Prozessabbild der ersten Steuerung geschriebener Wert von den Proxydiensten aus dem zumindest einen Prozessabbild der ersten Steuerung ausgelesen und zu der Überwachungseinrichtung übertragen, wonach durch die Überwachungseinrichtung für die Prüfung ein Vergleich zwischen dem Ausgabewert der ersten Anwendung und dem korrespondierenden Ausgabewert der aktualisierten Anwendung durchgeführt wird. Vorteilhaft wird dazu der aus dem Prozessabbild der ersten Steuerung ausgelesene Wert in das zumindest eine weitere Prozessabbild eingefügt, wonach die Überwachungseinrichtung für den Vergleich auf diesen gespeicherten Wert im weiteren Prozessabbild zugreift. In einem Beispiel wird in dem Fall, in dem bei dem Vergleich eine Differenz festgestellt wird, die prozentual oder absolut und optional nach einer vorgegebenen Zeit unter einem vordefiniertem Schwellwert liegt, die aktualisierte Anwendung als Kandidat für eine Übernahme in den Produktivbetrieb vorgesehen, zu der ersten produktiven Steuerung übertragen und dort anstelle der ursprünglichen Version der Anwendung in Betrieb gesetzt. Dazu wird durch die Überwachungseinrichtung im Falle einer Freigabe für den Produktivbetrieb eine Installation und ein Start der aktualisierten Anwendung auf der ersten Steuerung initiiert und eine Umschaltung von zumindest einem Ausgabewert der ersten Anwendung auf den entsprechenden Ausgabewert der neu installierten und in Betrieb genommenen aktualisierten Anwendung für einen Betrieb der industriellen Automatisierungsanordnung veranlasst. Anstelle oder zusätzlich zu der Überwachung der Differenz auf prozentuale oder absolute Abweichung können auch komplexere Algorithmen oder Regelwerke verwendet werden.

Der Zugriff der aktualisierten Anwendung auf die Werte, insbesondere Sensordaten, der ersten Anwendung bzw. des Produktivsystems kann automatisch konfiguriert werden, indem in dem Fall, in dem die aktualisierte Anwendung bei dem lokalen Prozessdatenmanagement der Testeinheit die Adressinformation eines lokal nicht verfügbaren Wertes anfordert, in einem ersten Schritt das Prozessdatenmanagement die Anforderung an den lokalen Proxydienst weiterleitet, in einem zweiten Schritt der lokale Proxydienst die Anfrage an den Proxydienst der ersten Steuerung weiterleitet, in einem dritten Schritt dieser Proxydienst den Wert aus einem lokalen Prozessabbild der ersten Steuerung ausliest und an den Proxydienst der anfordernden Testeinheit weiterleitet, in einem vierten Schritt der Proxydienst der anfordernden Testeinheit den Wert in das zumindest eine lokale Prozessabbild einfügt und die zugehörige Adressinformation im lokalen Prozessdatenmanagement registriert, in einem fünften Schritt das lokale Prozessdatenmanagement die Anforderung der aktualisierten Anwendung mit der Adressinformation beantwortet, und in einem sechsten Schritt die aktualisierte Anwendung mittels der Adressinformation auf den Wert zugreift.

Die Programmierschnittstelle bzw. das Interface, mit dem eine Anwendung auf ein Prozessabbild zugreift, ist vorteilhaft standardisiert, wobei sich diese Interfaces der Anwendungen und der Proxyeinrichtungen funktional nicht unterscheiden sollten. Es ist daher vorteilhaft, für die Proxyeinrichtung dieses Interface in einer separaten Anwendung zu kapseln, so dass unterschiedliche Versionen der Proxyeinrichtung, die für unterschiedliche Plattformen geschaffen werden sollen, das identische Interface der Anwendungen, die für dieselben Plattformen erzeugt werden, nutzen können. Dazu werden durch die Proxydienste jeweils eine lokale Proxy-Anwendung instanziiert, wobei die Proxy-Anwendungen die Zugriffe auf das jeweilige lokale Prozessabbild durchführen. Analog dazu ist es vorteilhaft, wenn jede Anwendung mit dem jeweiligen lokalen Prozessdatenmanagement der Steuerung mittels einer einheitlichen Applikationsschnittstelle kommuniziert, und wenn der Proxydienst mittels einer funktionsgleichen oder identischen Applikationsschnittstelle mit dem Prozessdatenmanagement derselben Steuerung kommuniziert.

Vorteilhaft übertragen die Proxydienste mittels eines Internet-Protokolls Anfragen und Werte. Insbesondere kommunizieren die Proxydienste vorteilhaft mittels eines OPC UA - Protokolls miteinander, so dass der Datenaustausch zwischen der ersten Steuerung und dem Testsystem automatisch konfiguriert werden kann.

Ausführungsbeispiele für das erfindungsgemäße Verfahren werden nachfolgend anhand der Zeichnungen erläutert. Diese dienen gleichzeitig der Erläuterung einer erfindungsgemäßen Anordnung.

Dabei zeigen:
- Figur 1: Einen Ausgangszustand zur Erläuterung der Problemstellung,
- Figur 2: die Zur-Verfügungstellung von Werten aus dem Prozessdatenmanagement einer Produktiveinheit zu einer Testeinheit,
- Figur 3: die Zur-Verfügungstellung der Werte für Anwendungen der Testeinheit, und
- Figur 4: das Testen einer aktualisierten Anwendung der Testeinheit im Parallelbetrieb mit einer Anwendung der Produktiveinheit.

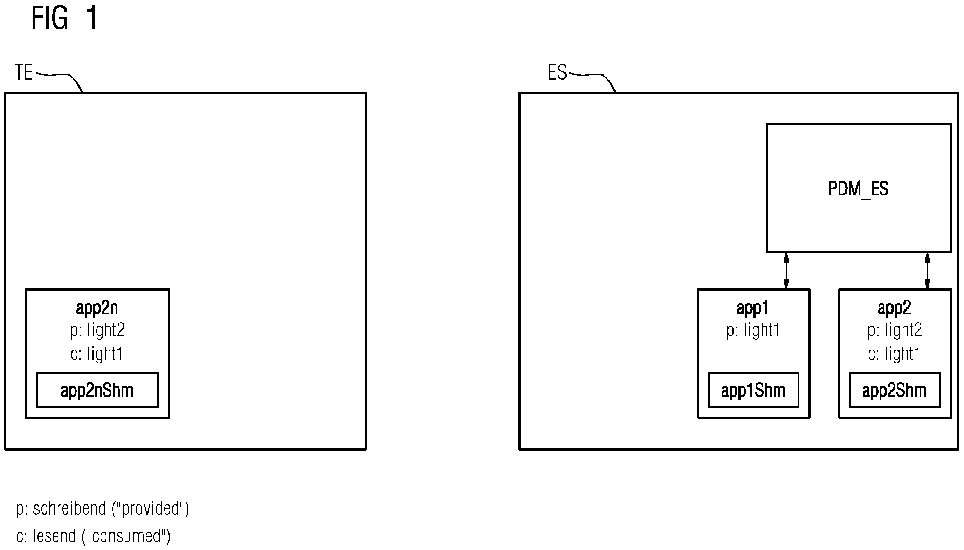

Die Figur 1 zeigt den Ausgangszustand für die nachfolgenden Erläuterungen. Auf der rechten Seite der Figur ist eine erste industrielle Steuerung ES gezeigt, die im Weiteren auch als Produktivsystem oder Produktiveinheit bezeichnet wird. Die Produktiveinheit ES umfasst das Prozessdaten-Management PDM_ES, das die auf der Produktiveinheit ES laufenden Anwendungen (Applikationen) app1, app2 - insbesondere deren Datenflüsse und Prozessabbilder - koordiniert und verwaltet. In den eigentlichen Datenfluss greift das Prozessdaten-Management PDM_ES nicht ein. Die Anwendungen app1, app2 greifen dazu direkt auf die Prozessabbilder app1Shm, app2Shm zu. Der Zugriff erfolgt dabei auf sog. Shared Memories ("Shm"), d.h., Applikationen, die Daten produzieren, schreiben diese in ein der jeweiligen Applikation zugeordnetes Shared Memory, welches das Prozessabbild darstellt. Das Shared Memory ist jeweils systemweit auf der jeweiligen Plattform les- und beschreibbar. Anwendungen und Applikationen, die diese Daten nutzen (konsumieren) wollen, erhalten über das Prozessdaten-Management die Information, in welchem Shared Memory sich diese Daten befinden. Die Anwendung app2 liest den von app1 in das Prozessabbild (Shared Memory) app1Shm geschriebenen Wert lightl; dieser Wert wird von der Anwendung app2 für die Berechnung einer Ausgangsgröße light2 benötigt. Das Wissen, wo lightl zu finden ist, hat das Prozessdaten-Management vermittelt. Die Doppelpfeile symbolisieren jeweils den dazu notwendigen Informationsaustausch zwischen den Anwendungen und dem Prozessdatenmanagement. Umgekehrt stellt die Anwendung app2 das Datum light2 bereit (das "Schreiben" ist gekennzeichnet durch das vorangestellte "p:" - "provided"); dieses Datum light2 ist im vorliegenden einfachen Beispiel eine Steuerungsinformation für einen angeschlossenen industriellen Prozess. Beispielsweise kann eine angeschlossene Beleuchtung eine Helligkeit zwischen 0% und 100% annehmen, je nachdem, wie hoch der Wert dieser "Variablen" light2 ist.

Außerhalb der Produktiveinheit ES befindet sich die app2n ("app2 neu"), die auf einem separaten Testsystem TE abläuft und die die in der Produktiveinheit verwendete app2 nach einem erfolgreichen Test ersetzen soll. Für den Test, der möglichst in einem zeitlichen Parallelbetrieb der Anwendungen app2, app2n erfolgen soll, benötigt die aktualisierte Anwendung app2n Zugriff auf das Datum lightl der ersten Steuerung ES - konkret der Anwendung appl. Der lesende Zugriff ist durch den Bezeichner "c:" ("consumed") dargestellt.

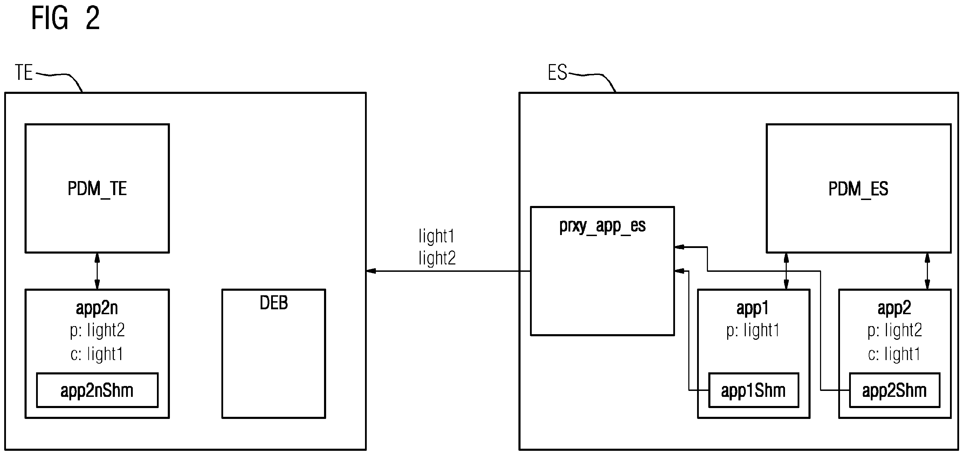

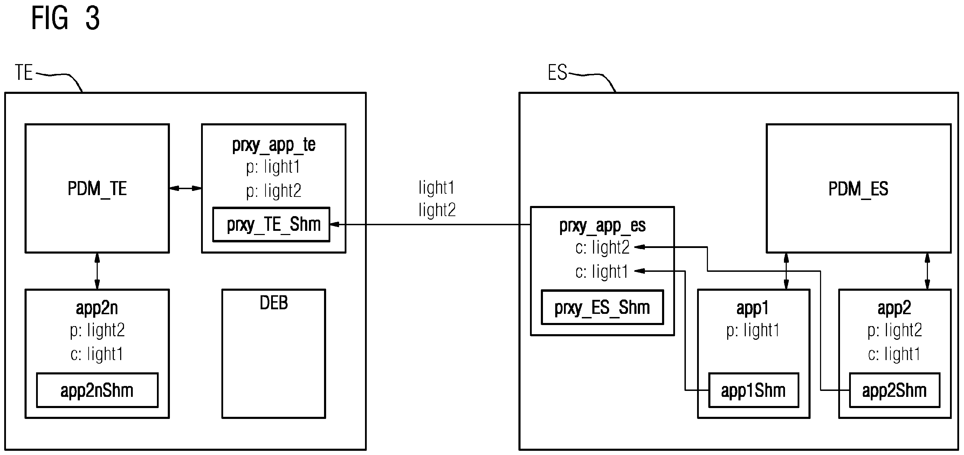

In der Figur 2 ist dargestellt, wie durch einen Nutzer die app2n auf der Testeinheit TE gestartet wird. Die Anwendung app2n meldet sich unmittelbar im lokalen Prozessdaten-Management PDM_TE der Testeinheit TE an, das wiederum das Prozessdaten-Management PDM_ES der Produktiveinheit ES triggert. Dies wird später anhand der Figur 3 näher erläutert.

Das Prozessdaten-Management PDM_ES der Produktiveinheit ES initiiert dazu eine sog. Proxydienst prxy_app_es (auch Proxy-Einheit genannt) auf der Produktiveinheit ES. Der Proxydienst prxy_app_es wird dabei so gestartet, dass er die in der Produktiveinheit ES produzierten Daten lightl und light2 liest und über eine IP-Kommunikationsschnittstelle "nach außen" zur Verfügung stellt (Pfeil zwischen den Einheiten TE und ES). Zu diesem Zweck übermittelt das Prozessdaten-Management PDM_TE der Testeinheit TE Informationen über die "Wunschdaten" lightl und light2 an das Prozessdaten-Management PDM_ES der Produktiveinheit ES; diese Kommunikation verläuft über die Proxyeinrichtungen prxy_app_te, prxy_app_es (siehe Figur 3); zusätzlich kann auch ein Server oder "Distributor" (nicht dargestellt) zwischen den Einheiten in die Kommunikation eingebunden sein. Auf der Testeinheit TE ist weiter Überwachungseinrichtung DEB, also ein Debugging- und Engineering-System oder kurz "Debugger" ("DEB"), installiert, der die Steuerung und Auswertung des Tests vornimmt. Das Debugging- und Engineering-System wird oft auch als "IDE" (Integrated Development Environment) bezeichnet.

Die Figur 3 zeigt, wie das Prozessdaten-Management PDM_TE der Testeinheit TE ihrerseits den Proxydienst prxy_app_te (lokale Proxy-Applikation der Testeinheit) startet. Der Proxydienst prxy_app_te liest über die IP-Kommunikationsschnittstelle die von dem Proxydienst prxy_app_es zur Verfügung gestellten Daten lightl und light2 und schreibt diese in ihr lokales Prozessabbild prxy_TE_Shm (Shared Memory des Proxydienstes); alternativ oder zusätzlich kann das Datum lightl auch in das Prozessabbild app2nShm der Anwendung app2n geschrieben bzw. kopiert werden. Die Daten lightl und light2 werden mittels Registrierung der "Variablennamen" und der Speicheradressen im Prozessdaten-Management PDM_TE registriert und stehen damit der Anwendung app2n und dem Debugger bzw. der Überwachungseinrichtung DEB zur Verfügung. Konsumiert oder gelesen wird das Datum light2 aus diesem Speicher prxy_TE_Shm aber nur von der Überwachungseinrichtung bzw. dem Debugger DEB, der diese Version vom Datum light2 mit der Version aus dem Speicher app2nShm der Anwendung app2n später vergleichen soll.

Die Daten lightl und light2 und ihr Speicherort im Prozessabbild prxy_TE_Shm sind somit im Prozessdaten-Management PDM_TE der Testeinheit TE angemeldet, so dass dieses die Information des nun lokal auf der Testeinheit TE vorhandenen Datums light 1 an die konsumierende Anwendung app2n weitergibt.

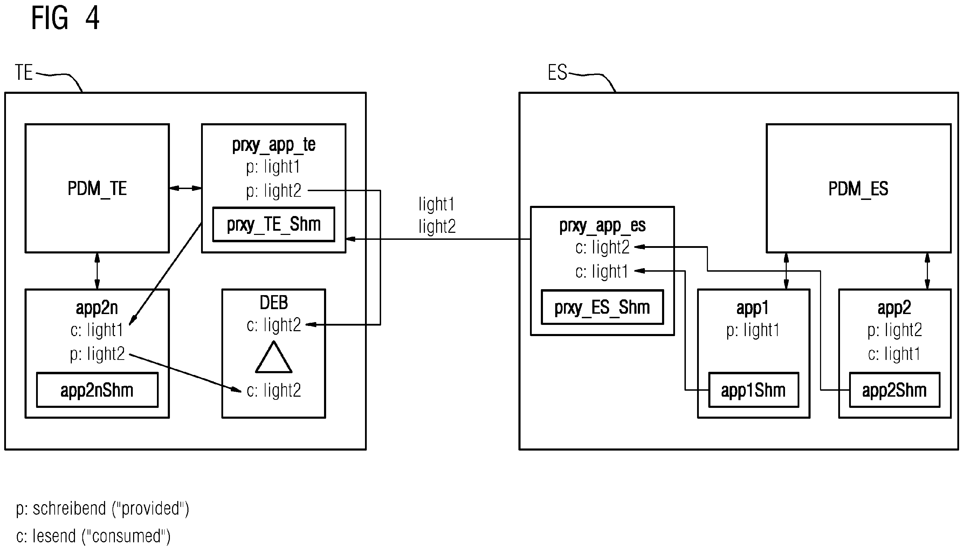

In Figur 4 ist dargestellt, wie die Anwendung app2n nun das Datum lightl aus dem Prozessabbild prxy_TE_Shm der Proxyeinrichtung prxy_app_te liest, d.h., die Anwendung app2n erhält mit Hilfe der zwischengeschalteten Proxy-Applikationen prxy_app_es und prxy_app_te das Datum lightl von der Anwendung app1 aus der Produktiveinheit ES und kann somit mit den "Originaldaten" getestet werden, d.h. es besteht insbesondere die Möglichkeit, das von den Anwendungen app2 und app2n jeweils produzierte Datum light2 zu vergleichen - dargestellt durch ein Dreieck. Anstelle eines Vergleichs kann das von der Anwendung app2n produzierte Datum light2 auch gegen festgesetzte Grenzwerte oder dergleichen geprüft werden. Weiterhin ist es möglich, dass das von der aktualisierten Anwendung app2n produzierte Datum light2 über die Proxy-Dienste bzw. Proxy-Applikationen prxy_app_es und prxy_app_te zurück an die Produktiveinheit ES geschickt und dort in das Prozessabbild app2Shm geschrieben wird, so dass in einem weiteren Schritt die sich noch auf der Testeinheit befindliche Anwendung app2n die Aufgaben der originalen Anwendung app2 übernimmt (dieser Vorgang ist aus Gründen der Übersichtlichkeit nicht in den Figuren dargestellt). Bei einer Vielzahl von erzeugten Ausgabewerten kann dies schrittweise erfolgen, wobei ein Nutzer des Debuggers DEB für jeden Ausgabewert separat einstellen kann, ob und wann und unter welchen Bedingungen der "Originale" oder der von der aktualisierten Anwendung produzierte Wert im Produktivbetrieb verwendet wird.

In diesem Vorgang hat der Nutzer also mittels einer Benutzerschnittstelle die volle Kontrolle, welche durch die Anwendung app2n erzeugten Daten (z.B. Werte für Aktoren) im Produktivbetrieb übernommen werden sollen - dies ist durch den Datenaufbau über die Proxydienste prxy_app_es und prxy_app_te möglich. Die ganzen Vorgänge können stets mit einer Test- bzw. Debugging-Einrichtung DEB durch den Nutzer überwacht werden; insbesondere kann auch verhindert werden, dass Werte produktiv gesetzt werden, die aus Sicherheitsgründen oder dgl. ungeeignet sind.

In einem finalen Schritt (nicht dargestellt) wird - nach erfolgreichem Test - die aktualisierte Anwendung app2n auf die Produktiveinheit ES übertragen und dort wird dann nahtlos von der Anwendung app2 auf die neue Anwendung app2n umgeschaltet. Die ursprüngliche Anwendung app2 kann jetzt gestoppt und von der Produktiveinheit ES entfernt werden, da die Anwendung app2n die Aufgaben vollständig übernommen hat.

Damit ist eine stufenweise Übernahme von Applikationen / Anwendungen aus Simulation/Test in den laufenden Betrieb möglich. Während des Testens einer Anwendung hat der Nutzer schon die Möglichkeit, Daten in das Produktivsystem zu übernehmen und somit sukzessive eine aktualisierte Anwendung probeweise in Betrieb zu nehmen, wobei jederzeit auf die von der originalen Anwendung erstellten Steuerungswerte zurückgeschaltet werden kann.

## Patentansprüche

1. Verfahren zur Inbetriebnahme einer aktualisierten Anwendung (app2n) für eine industrielle Automatisierungsanordnung,
wobei eine erste industrielle Steuerung (ES) mit einer ersten Anwendung (app2) zumindest ein lokales Prozessabbild (app1Shm, app2Shm) mit lokal verwendeten Prozessdaten umfasst,
wobei die Prozessdaten aus einer Anzahl Werten bestehen, insbesondere Werte für Sensoren und/oder Aktoren der industriellen Automatisierungsanordnung,
wobei ein lokales Prozessdatenmanagement (PDM_ES) zur Verwaltung von Bezeichnern und Speicheradressen der Werte vorgesehen ist,
wobei die erste Anwendung (app2) Informationen über die Bezeichner und Speicheradressen der Werte mit dem lokalen Prozessdatenmanagement (PDM_ES) austauscht und Werte im zumindest einen lokalen Prozessabbild (app1Shm, app2Shm) mithilfe der Informationen liest und/oder schreibt,
**dadurch gekennzeichnet,**
**dass** eine Testeinheit (TE) mit der aktualisierten Anwendung (app2n), insbesondere einer zu testenden neuen Version der ersten Anwendung (app2), und mit zumindest einem weiteren Prozessabbild (app2nShm) und mit einem weiteren Prozessdatenmanagement (PDM_TE) vorgesehen wird, wobei die aktualisierte Anwendung (app2n) Informationen über die Bezeichner und Speicheradressen der Werte mit dem lokalen Prozessdatenmanagement (PDM_TE) der Testeinheit (TE) austauscht und Werte im zumindest einen weiteren Prozessabbild (app2nShm) liest und/oder schreibt,
**dass** auf der ersten Steuerung (ES) und auf der Testeinheit jeweils ein Proxydienst eingerichtet wird, wobei der Proxydienst jeweils eine Kommunikation mit dem jeweils lokalen Prozessdatenmanagement (PDM_ES, PDM_TE) durchführt und Werte im jeweiligen lokalen Prozessabbild (app1Shm, app2Shm, app2nShm) mithilfe der dabei ausgetauschten Informationen liest und/oder schreibt, dass die aktualisierte Anwendung (app2n) parallel zur ersten Anwendung (app2) ausgeführt wird, wobei die von der aktualisierten Anwendung (app2n) zu lesenden Werte von den Proxydiensten aus dem zumindest einen Prozessabbild (app1Shm, app2Shm) der ersten Steuerung ausgelesen und in das zumindest eine weitere Prozessabbild (app2nShm) eingefügt werden,
wobei mittels einer Überwachungseinrichtung (DEB) eine Prüfung zumindest eines durch die aktualisierte Anwendung (app2n) in das zumindest eine Prozessabbild (app2nShm) der Testeinheit (TE) gespeicherten Ausgabewertes durchführt, und
wobei die aktualisierte Anwendung (app2n) erst nach einer erfolgreichen Prüfung für eine Verwendung in einem produktiven Betrieb freigegeben wird.

2. Verfahren nach Patentanspruch 1,
**dadurch gekennzeichnet,**
**dass** zumindest ein von der ersten Anwendung (app2) als Ausgabewert in das Prozessabbild (app2Shm) der ersten Steuerung geschriebener Wert von den Proxydiensten aus dem zumindest einen Prozessabbild (app1Shm, app2Shm) der ersten Steuerung (ES) ausgelesen und zu der Überwachungseinrichtung übertragen wird, und
**dass** durch die Überwachungseinrichtung für die Prüfung ein Vergleich zwischen dem Ausgabewert der ersten Anwendung (app2) und dem Ausgabewert der aktualisierten Anwendung (app2n) durchgeführt wird.

3. Verfahren nach Patentanspruch 2,
**dadurch gekennzeichnet,**
**dass** der aus dem Prozessabbild (app1Shm, app2Shm) der ersten Steuerung (ES) ausgelesene Wert in das zumindest eine weitere Prozessabbild (app2nShm, prxy_TE_Shm) eingefügt wird und die Überwachungseinrichtung (DEB) für den Vergleich auf diesen gespeicherten Wert im weiteren Prozessabbild zugreift.

4. Verfahren nach einem der Patentansprüche 2 oder 3,
**dadurch gekennzeichnet,**
**dass** in dem Fall, in dem bei dem Vergleich eine Differenz festgestellt wird, die prozentual oder absolut unter einem vordefiniertem Schwellwert liegt, die aktualisierte Anwendung (app2n) als Kandidat für eine Übernahme in den Produktivbetrieb vorgesehen wird.

5. Verfahren nach einem der vorhergehenden Patentansprüche,
**dadurch gekennzeichnet,**
**dass** durch die Überwachungseinrichtung (DEB) im Falle einer Freigabe für den Produktivbetrieb eine Installation und ein Start der aktualisierten Anwendung (app2n) auf der ersten Steuerung (ES) initiiert und eine Umschaltung von zumindest einem Ausgabewert der ersten Anwendung (app2) auf den entsprechenden Ausgabewert der neu installierten und in Betrieb genommenen aktualisierten Anwendung (app2n) für einen Betrieb der industriellen Automatisierungsanordnung veranlasst wird.

6. Verfahren nach einem der vorhergehenden Patentansprüche,
**dadurch gekennzeichnet,**
**dass** in dem Fall, in dem die aktualisierte Anwendung (app2n) bei dem lokalen Prozessdatenmanagement (PDM_TE) der Testeinheit (TE) die Adressinformation eines lokal nicht verfügbaren Wertes anfordert,
in einem ersten Schritt das Prozessdatenmanagement (PDM_TE) die Anforderung an den lokalen Proxydienst weiterleitet,
in einem zweiten Schritt der lokale Proxydienst die Anfrage an den Proxydienst der ersten Steuerung (ES) weiterleitet,
in einem dritten Schritt dieser Proxydienst den Wert aus einem lokalen Prozessabbild (app1Shm, app2Shm) der ersten Steuerung (ES) ausliest und an den Proxydienst der anfordernden Testeinheit (TE) weiterleitet,
in einem vierten Schritt der Proxydienst der anfordernden Testeinheit den Wert in das zumindest eine lokale Prozessabbild (prxy_TE_Shm) einfügt und die zugehörige Adressinformation im lokalen Prozessdatenmanagement (PDM_TE) registriert,
in einem fünften Schritt das lokale Prozessdatenmanagement (PDM_TE) die Anforderung der aktualisierten Anwendung (app2n) mit der Adressinformation beantwortet, und in einem sechsten Schritt die aktualisierte Anwendung (app2n) mittels der Adressinformation auf den Wert zugreift.

7. Verfahren nach einem der vorhergehenden Patentansprüche,
**dadurch gekennzeichnet,**
**dass** durch zumindest einen der Proxydienste eine lokale Proxy-Anwendung instanziiert wird, wobei die Proxy-Anwendung für den Proxydienst die Zugriffe auf das lokale Prozessabbild durchführt.

8. Verfahren nach einem der vorhergehenden Patentansprüche,
**dadurch gekennzeichnet,**
**dass** jede Anwendung (app1, app2, app2n) mit dem jeweiligen lokalen Prozessdatenmanagement (PDM_ES, PDM_TE) der Steuerung (ES) bzw. Testeinheit (TE) mittels einer einheitlichen Applikationsschnittstelle kommuniziert, und
**dass** der Proxydienst (prxy_app_te, prxy_app_es) mittels einer funktionsgleichen oder identischen Applikationsschnittstelle mit dem Prozessdatenmanagement (PDM_ES, PDM_TE) derselben Steuerung (ES) bzw. Testeinheit (TE) kommuniziert.

9. Verfahren nach einem der vorhergehenden Patentansprüche,
**dadurch gekennzeichnet,**
**dass** die Proxydienste mittels eines Internet-Protokolls Anfragen und Werte übertragen.

10. Verfahren nach Patentanspruch 9,
**dadurch gekennzeichnet,**
**dass** die Proxydienste mittels eines OPC UA - Protokolls miteinander kommunizieren.

11. Anordnung zur Inbetriebnahme einer aktualisierten Anwendung (app2n) für eine industrielle Automatisierungsanordnung,
wobei eine erste industrielle Steuerung (ES) mit einer ersten Anwendung (app2) zumindest ein lokales Prozessabbild (app1Shm, app2Shm) mit lokal verwendeten Prozessdaten umfasst,
wobei die Prozessdaten aus einer Anzahl Werten bestehen, insbesondere Werte für Sensoren und/oder Aktoren der industriellen Automatisierungsanordnung,
wobei die erste Steuerung (ES) ein lokales Prozessdatenmanagement (PDM_ES) zur Verwaltung von Bezeichnern und Speicheradressen der Werte umfasst,
wobei die erste Anwendung (app2) zum Austausch von Informationen über die Bezeichner und Speicheradressen der Werte mit dem lokalen Prozessdatenmanagement (PDM_ES) eingerichtet und zum Leser und/oder Schreiben von Werten im zumindest einen lokalen Prozessabbild (app1Shm, app2Shm) mithilfe der Informationen ausgebildet ist,
**dadurch gekennzeichnet,**
**dass** eine Testeinheit (TE) mit der aktualisierten Anwendung (app2n) vorgesehen ist, insbesondere mit einer zu testenden neuen Version der ersten Anwendung (app2), und mit zumindest einem weiteren Prozessabbild (app2nShm) und mit einem weiteren Prozessdatenmanagement (PDM_TE), wobei die aktualisierte Anwendung (app2n) zum Austausch von Informationen über die Bezeichner und Speicheradressen der Werte mit dem lokalen Prozessdatenmanagement (PDM_TE) der Testeinheit und zum Lesen und/oder Schreiben von Werten im zumindest einen weiteren Prozessabbild (app2nShm) eingerichtet ist, dass auf der Steuerung und auf der Testeinheit jeweils ein Proxydienst eingerichtet ist, wobei der Proxydienst jeweils zur Durchführung einer Kommunikation mit dem jeweils lokalen Prozessdatenmanagement (PDM_ES, PDM_TE) und zum Lesen und/oder Schreiben von Werten im jeweiligen lokalen Prozessabbild (app1Shm, app2Shm, prxy_ES_Shm, prxy_TE_Shm) mithilfe der dabei ausgetauschten Informationen eingerichtet ist,
**dass** eine Ausführung der aktualisierte Anwendung (app2n) parallel zur ersten Anwendung (app2) vorgesehen ist, wobei weiter vorgesehen ist, dass die von der aktualisierten Anwendung (app2n) zu lesenden Werte zumindest teilweise von den Proxydiensten aus dem zumindest einen Prozessabbild (app1Shm, app2Shm) der ersten Steuerung (ES) ausgelesen und in das zumindest eine weitere Prozessabbild (prxy_TE_Shm, app2nShm) eingefügt werden, wobei eine Überwachungseinrichtung zur Prüfung zumindest eines durch die aktualisierte Anwendung (app2n) in das zumindest eine Prozessabbild (prxy_TE_Shm, app2nShm) der Testeinheit (TE) gespeicherten Ausgabewertes vorgesehen ist, wobei weiter vorgesehen ist, dass die aktualisierte Anwendung (app2n) erst nach einer erfolgreichen Prüfung für eine Verwendung in einem produktiven Betrieb freigegeben wird.

## Claims

1. Method for commissioning an updated application (app2n) for an industrial automation arrangement,
wherein a first industrial controller (ES) containing a first application (app2) comprises at least one local process image (app1Shm, app2Shm) containing locally used process data,
wherein the process data consist of a number of values, in particular values for sensors and/or actuators of the industrial automation arrangement,
wherein provision is made for a local process data management system (PDM_ES) for managing identifiers and memory addresses of the values,
wherein the first application (app2) exchanges information about the identifiers and memory addresses of the values with the local process data management system (PDM_ES) and reads and/or writes values from and/or to the at least one local process image (app1Shm, app2Shm) using the information,
**characterized**
**in that** provision is made for a test unit (TE) containing the updated application (app2n), in particular a new version, to be tested, of the first application (app2), and containing at least one further process image (app2nShm) and containing a further process data management system (PDM_TE), wherein the updated application (app2n) exchanges information about the identifiers and memory addresses of the values with the local process data management system (PDM_TE) of the test unit (TE) and reads and/or writes values from and/or to the at least one further process image (app2nShm),
**in that** a respective proxy service is set up on the first controller (ES) and on the test unit, wherein the proxy service performs respective communication with the respective local process data management system (PDM_ES, PDM_TE) and reads and/or writes values from and/or to the respective local process image (app1Shm, app2Shm, app2nShm) using the information exchanged in the process, in that the updated application (app2n) is executed in parallel with the first application (app2), wherein the values to be read from the updated application (app2n) are read from the at least one process image (app1Shm, app2Shm) of the first controller by the proxy services and inserted into the at least one further process image (app2nShm),
wherein a monitoring device (DEB) tests at least one output value stored in the at least one process image (app2nShm) of the test unit (TE) by the updated application (app2n), and
wherein the updated application (app2n) is cleared for use in productive operation only following a successful test.

2. Method according to Patent Claim 1,
**characterized**
**in that** at least one value written to the process image (app2Shm) of the first controller as output value by the first application (app2) is read from the at least one process image (app1Shm, app2Shm) of the first controller (ES) by the proxy services and transferred to the monitoring device, and
**in that** the monitoring device, for the test, performs a comparison between the output value of the first application (app2) and the output value of the updated application (app2n).

3. Method according to Patent Claim 2,
**characterized**
**in that** the value read from the process image (app1Shm, app2Shm) of the first controller (ES) is inserted into the at least one further process image (app2nShm, prxy TE Shm) and the monitoring device (DEB), for the comparison, accesses this stored value in the further process image.

4. Method according to either of Patent Claims 2 and 3,
**characterized**
**in that**, in the event that a difference is identified in the comparison, this difference being below a predefined threshold value in terms of percentage or in absolute terms, the updated application (app2n) is provided as a candidate for incorporation into productive operation.

5. Method according to one of the preceding patent claims,
**characterized**
**in that** the monitoring device (DEB), in the event of clearance for productive operation, initiates installation and booting of the updated application (app2n) on the first controller (ES) and prompts a changeover from at least one output value of the first application (app2) to the corresponding output value of the newly installed and commissioned updated application (app2n) for operation of the industrial automation arrangement.

6. Method according to one of the preceding patent claims,
**characterized**
**in that**, in the event that the updated application (app2n) requests the address information of a locally unavailable value from the local process data management system (PDM_TE) of the test unit (TE),
in a first step, the process data management system (PDM_TE) forwards the request to the local proxy service, in a second step, the local proxy service forwards the request to the proxy service of the first controller (ES), in a third step, this proxy service reads the value from a local process image (app1Shm, app2Shm) of the first controller (ES) and forwards it to the proxy service of the requesting test unit (TE),
in a fourth step, the proxy service of the requesting test unit inserts the value into the at least one local process image (prxy TE Shm) and registers the associated address information in the local process data management system (PDM_TE),
in a fifth step, the local process data management system (PDM_TE) responds to the request of the updated application (app2n) with the address information, and,
in a sixth step, the updated application (app2n) accesses the value by way of the address information.

7. Method according to one of the preceding patent claims,
**characterized**
**in that** at least one of the proxy services instantiates a local proxy application, wherein the proxy application accesses the local process image for the proxy service.

8. Method according to one of the preceding patent claims,
**characterized**
**in that** each application (app1, app2, app2n) communicates with the respective local process data management system (PDM_ES, PDM_TE) of the controller (ES) or test unit (TE) by way of a uniform application interface, and
**in that** the proxy service (prxy_app_te, prxy_app_es) communicates with the process data management system (PDM_ES, PDM_TE) of the same controller (ES) or test unit (TE) by way of a functionally identical or identical application interface.

9. Method according to one of the preceding patent claims,
**characterized**
**in that** the proxy services transfer requests and values by way of an Internet protocol.

10. Method according to Patent Claim 9,
**characterized**
**in that** the proxy services communicate with one another by way of an OPC UA protocol.

11. Arrangement for commissioning an updated application (app2n) for an industrial automation arrangement,
wherein a first industrial controller (ES) containing a first application (app2) comprises at least one local process image (app1Shm, app2Shm) containing locally used process data,
wherein the process data consist of a number of values, in particular values for sensors and/or actuators of the industrial automation arrangement,
wherein the first controller (ES) comprises a local process data management system (PDM_ES) for managing identifiers and memory addresses of the values,
wherein the first application (app2) is configured to exchange information about the identifiers and memory addresses of the values with the local process data management system (PDM_ES) and is designed to read and/or write values from and/or to the at least one local process image (app1Shm, app2Shm) using the information,
**characterized**
**in that** provision is made for a test unit (TE) containing the updated application (app2n), in particular containing a new version, to be tested, of the first application (app2), and containing at least one further process image (app2nShm) and containing a further process data management system (PDM_TE), wherein the updated application (app2n) is configured to exchange information about the identifiers and memory addresses of the values with the local process data management system (PDM_TE) of the test unit and to read and/or write values from and/or to the at least one further process image (app2nShm),
**in that** a respective proxy service is set up on the controller and on the test unit, wherein the proxy service is configured to perform respective communication with the respective local process data management system (PDM_ES, PDM TE) and to read and/or write values from and/or to the respective local process image (app1Shm, app2Shm, prxy_ES_Shm, prxy_TE_Shm) using the information exchanged in the process,
**in that** provision is made for the updated application (app2n) to be executed in parallel with the first application (app2), wherein provision is furthermore made for the values to be read from the updated application (app2n) to be read from the at least one process image (app1Shm, app2Shm) of the first controller (ES) at least partly by the proxy services and inserted into the at least one further process image (prxy TE Shm, app2nShm),
wherein provision is made for a monitoring device for testing at least one output value stored in the at least one process image (prxy_TE_Shm, app2nShm) of the test unit (TE) by the updated application (app2n), wherein provision is furthermore made for the updated application (app2n) to be cleared for use in productive operation only following a successful test.

## Revendications

1. Procédé de mise en service d'une application (app2n) mise à jour pour un agencement d'automatisation industrielle,
dans lequel une première commande (ES) industrielle le ayant une première application (app2) comprend au moins une image (app1Shm, app2Shm) de processus local ayant des données de processus utilisées localement,
dans lequel les données de processus sont constituées d'un certain nombre de valeurs, en particulier de valeurs pour des capteurs et/ou des actionneurs de l'agencement d'automatisation industrielle,
dans lequel il est prévu une gestion (PDM_ES) locale de données de processus pour la gestion d'identifiants et d'adresses de mémoire des valeurs,
dans lequel la première application (app2) échange des informations sur les identifiants et les adresses de mémoire des valeurs avec la gestion (PDM_ES) locale de données de processus et lit et/ou écrit, à l'aide des informations, des valeurs dans au moins une image (app1Shm, app2Shm) de processus local,
**caractérisé**
**en ce qu'**il est prévu une unité (TE) de test ayant l'application (app2n) mise à jour, en particulier une version nouvelle à tester de la première application (app2), et ayant au moins une autre image (app2nShm) de processus et ayant une autre gestion (PDM_TE) de données de processus, dans lequel l'application (app2n) mise à jour échange des informations sur les identifiants et les adresses de mémoire des valeurs avec la gestion (PDM_TE) locale de données de processus de l'unité (TE) de test et lit et/ou écrit des valeurs dans au moins une autre image (app2nShm) de processus,
**en ce que** l'on agence, sur la première commande (ES) et sur l'unité de test, respectivement un service proxy, dans lequel le service proxy effectue respectivement une communication avec la gestion (PDM_ES, PDM_TE) locale respective de données de processus et lit et/ou écrit, à l'aide des informations alors échangées, des valeurs dans l'image (app1Shm, app2Shm, app2nShm) locale de processus respective,
**en ce que** l'on exécute l'application (app2n) mise à jour parallèlement à la première application (app2), dans lequel on lit les valeurs, à lire par l'application (app2n) mise à jour, par les services proxy, dans la au moins une image (app1Shm, app2Shm) de processus de la première commande et on les insère dans la au moins une autre image (app2nShm) de processus,
dans lequel, au moyen d'un dispositif (DEB) de contrôle, s'effectue un contrôle d'au moins une valeur de sortie mise en mémoire par l'application (app2n) mise à jour dans la au moins une image (app2nShm) de processus de l'unité (TE) de test, et
dans lequel on valide, pour une utilisation dans un fonctionnement en production, l'application (app2n) mise à jour, seulement après un contrôle couronné de succès.

2. Procédé suivant la revendication 1,
**caractérisé**
**en ce qu'**on lit, par les services proxy, dans la au moins une image (app1Shm, app2Shm) de processus de la première commande (ES), une valeur écrite par la première application (app2) comme valeur de sortie dans l'image (app2Shm) de processus de la première commande, et on la transfère au dispositif de contrôle, et
**en ce que**, par le dispositif de contrôle, on effectue, pour le contrôle, une comparaison entre la valeur de sortie de la première application (app2) et la valeur de sortie de l'application (app2n) mise à jour.

3. Procédé suivant la revendication 2,
**caractérisé**
**en ce que** l'on insère la valeur, lue dans l'image (app1Shm, app2Shm) de processus de la première commande (ES) dans la au moins une autre image (app2nShm, prxy_TE_Shm) de processus et le dispositif (DEB) de contrôle accède, pour la comparaison, à cette valeur mise en mémoire dans l'autre image de processus.

4. Procédé suivant l'une des revendications 2 ou 3,
**caractérisé**
**en ce que**, dans le cas où l'on constate, lors de la comparaison, une différence, qui en pourcentage ou en valeur absolue est inférieure à une valeur de seuil définie à l'avance, on prescrit l'application (app2n) mise à jour comme candidat pour une prise en charge dans le fonctionnement en production.

5. Procédé suivant l'une des revendications précédentes,
**caractérisé en ce que**,
par le dispositif (DEB) de contrôle, on lance, dans le cas d'une validation pour le fonctionnement en production, une installation et un démarrage de l'application (app2n) mise à jours sur la première commande (ES) et on provoque une commutation d'au moins une valeur de sortie de la première application (app2) à la valeur de sortie correspondante de l'application (app2n) installée nouvellement mise à jour et mise en fonctionnement pour un fonctionnement de l'agencement d'automatisation industrielle.

6. Procédé suivant l'une des revendications précédentes,
**caractérisé en ce que**,
dans le cas où l'application (app2n) mise à jour demande l'information d'adresse d'une valeur locale non disponible à la gestion (PDM_TE) locale de données de processus de données de processus de l'unité (TE) de test,
dans un premier stade, la gestion (PDM_TE) de données de processus achemine la demande au service proxy local,
dans un deuxième stade, le service proxy local achemine la demande au service proxy de la première commande (ES),
dans un troisième stade, ce service proxy lit la valeur dans une image (app1Shm, app2Shm) de processus local de la première commande (ES) et l'achemine au service proxy de l'unité (TE) de test demandeuse,
dans un quatrième stade, le service proxy de l'unité de test demandeuse insère la valeur dans la au moins une image (prxy_TE_Shm) de processus local et enregistre l'information d'adresse lui appartenant dans la gestion (PDM_TE) locale de données de processus,
dans un cinquième stade, la gestion (PDM_TE) locale de données de processus répond à la demande de l'application (app2n) mise à jour par l'information d'adresse, et
dans un sixième stade, l'application (app2n) mise à jour accède à la valeur au moyen de l'information d'adresse.

7. Procédé suivant l'une des revendications précédentes,
**caractérisé**
**en ce que**, par au moins l'un des services proxy, on instance une application proxy locale, l'application proxy effectuant pour le service proxy les accès à l'image de processus local.

8. Procédé suivant l'une des revendications précédentes,
**caractérisé**
**en ce que** chaque application (app1, app2, app2n) communique avec la gestion (PDM_ES, PDM_TE) locale de données de processus respective de la commande (ES) et respectivement de l'unité (TE) de test au moyen d'une interface d'application unitaire, et
**en ce que** le service (prxy_app_te, prxy_app_es) proxy communique au moyen d'une même fonction ou d'une interface d'application identique avec la gestion (PDM_ES, PDM_TE) de données de processus de la même commande (ES) et respectivement l'unité (TE) de test.

9. Procédé suivant l'une des revendications précédentes,
**caractérisé**
**en ce que** les services proxy transfèrent des demandes et des valeurs au moyen d'un protocole internet.

10. Procédé suivant la revendication 9,
**caractérisé en ce que**
les services proxy communiquent entre eux au moyen d'un protocole OPC UA.

11. Agencement de mise en service d'une application (app2n) mise à jour pour un agencement d'automatisation industrielle,
dans lequel une première commande (ES) industrielle le ayant une première application (app2) comprend au moins une image (app1Shm, app2Shm) de processus local ayant des données de processus utilisées localement,
dans lequel les données de processus sont constituées d'un certain nombre de valeurs, en particulier de valeurs pour des capteurs et/ou des actionneurs de l'agencement d'automatisation industrielle,
dans lequel la première commande (ES) comprend une gestion (PDM_ES) locale de données de processus pour la gestion d'identifiants et d'adresses de mémoire des valeurs,
dans lequel la première application (app2) est agencée pour l'échange d'informations sur les identifiants et les adresses de mémoire des valeurs avec la gestion (PDM_ES) locale de données de processus et est constituée pour la lecture et/ou l'écriture de valeurs dans au moins une image (app1Shm, app2Shm) de processus local à l'aide des informations,
**caractérisé**
**en ce qu'**il est prévu une unité (TE) de test ayant l'application (app2n) mise à jour, en particulier une version nouvelle à tester de la première application (app2), et ayant au moins une autre image (app2nShm) de processus et ayant une autre gestion (PDM_TE) de données de processus, dans lequel l'application (app2n) mise à jour est agencée pour l'échange d'informations sur les identifiants et les adresses de mémoire des valeurs avec la gestion (PDM_TE) locale de données de processus de l'unité de test et pour la lecture et/ou l'écriture de valeurs dans au moins une autre image (app2nShm) de processus,
**en ce qu'**il est agencé, sur la commande et sur l'unité de test respectivement un service proxy, dans lequel le service proxy est agencé pour effectuer une communication avec la gestion (PDM_ES, PDM_TE) locale respective de données de processus et pour la lecture et/ou l'écriture de valeurs dans l'image (app1Shm, app2Shm, prxy_ES_Shm, prxy_TE_Shm) de processus local à l'aide des informations ainsi échangées,
**en ce qu'**un exécution de l'application (app2n) mise à jour est prévue en parallèle à la première application (app2), dans lequel il est prévu en outre de lire dans la au moins une image (app1Shm, app2Shm) de processus de la première commande (ES), au moins en partie par les services proxy, les valeurs à lire par l'application (app2n) mise à jour et de les insérer dans la au moins une autre image (prxy_TE_Shm, app2nShm) de processus, dans lequel il est prévu un dispositif de contrôle pour le contrôle d'au moins une valeur de sortie mise en mémoire par l'application (app2n) mise à jour dans la au moins une image (prxy_TE_Shm, app2nShm) de processus de l'unité (TE) de test, dans lequel il est prévu en outre de valider, pour une utilisation dans un fonctionnement en production, l'application (app2n) mise à jour seulement après un contrôle couronné de succès.
